# EUROPEAN PATENT SPECIFICATION

(11) **EP 1 106 877 B1**
(45) Date of publication and mention of the grant of the patent: **11.08.2004**
(21) Application number: 00126783.0
(22) Date of filing: 06.12.2000
(51) Int. Cl.: F16H 61/32

(54) **A unit for the servo-assisted operation of a motor-vehicle gearbox**
Vorrichtung zur Hilfskraftbetätigung eines Kraftfahrzeuggetriebes
Dispositif à servocommande pour boîte de vitesses d'un véhicule automobile

(30) Priority: 09.12.1999 IT TO991083
(43) Date of publication of application: 13.06.2001
(73) Proprietor: SILA HOLDING INDUSTRIALE SPA, 10042 Nichelino (Torino) (IT)
(72) Inventor: Melis, Salvatore, 10093 Collegno (Torino) (IT)
(74) Representative: Fioravanti, Corrado

(56) References cited:
- EP-A- 0 169 769
- EP-A- 0 959 271
- US-A- 4 817 468
- US-A- 4 922 769

## Description

The present invention relates in general to motor-vehicle gearbox operating units according to the preamble of claim 1.

A "gearbox operating unit" is intended to define the set of devices which enables a transmission ratio or gear for the movement of the vehicle to be engaged on the basis of a manual operation or of a drive setting set by the driver of the vehicle.

In mechanical gearboxes, the desired ratio or gear is engaged by controlling the positions of a pair of levers which project from the gearbox and by means of which it is possible to alter the configuration of the transmission members disposed therein. Each of the two levers is intended to be affected by one of the two movements into which the movement of the gearshift lever is broken down, which are known as the selection and engagement movements, and the various combinations of which define a particular transmission ratio of the gearbox.

Most commonly, gearbox operating units are entirely mechanical. In this case, the driver of the vehicle can engage a gear of the gearbox by operating a gearshift lever which is disposed in the passenger compartment of the vehicle and is thus remote from the gearbox, and is connected, by means of a pair of movable mechanical elements, to the levers which project from the gearbox casing. These mechanical elements may be rigid or flexible. In the latter case, they are constituted by "push-pull" cables, that is, cables of the type comprising an operating cable mounted for sliding inside a sheath. In any case, these movable mechanical elements transmit the movement of the gearshift lever to the operating levers which project from the gearbox casing.

However, mechanical gearbox operating units have some disadvantages. For example, the length of the gearshift lever has to be such as to enable the engagement of the various gears to be controlled as a result of the application of moderate forces by the driver of the vehicle, and the gearshift lever may therefore be quite bulky. Moreover, because of the working temperatures and because the elements of the system, that is, the movable mechanical elements and the various elements associated therewith, such as reaction brackets, bushes and sealing rings, can yield resiliently, the travels which have to be imparted to the gearshift lever in order to bring about correct engagement of transmission ratios of the gearbox are generally greater than the theoretical travels and are not constant. Moreover, if the movable mechanical elements are formed by push-pull cables, owing to the clearance between the sliding cables and their sheaths, the gearshift lever may vibrate, generating noise, in certain operating conditions of the engine of the vehicle.

Automatic or servo-assisted units for operating a mechanical gearbox are also known; in these units the gearshift lever does not transmit the forces necessary for the engagement of the various transmission ratios directly and mechanically, but allows to control the operating conditions of hydraulic and/or electric actuators, for example, solenoid valves which provoke the movement of the operating levers projecting from the gearbox. In this case, the actuator devices are usually arranged on top of the gearbox so as to be able to interact with these operating levers directly. In particular, the hydraulic and/or electric actuators are controlled by means of a central control unit which is normally also disposed adjacent the actuator unit and thus also on the gearbox casing.

Known servo-assisted gearbox operating units provide for various ways of moving the gearshift lever. In particular, it is possible to have operating patterns in which the gearshift lever can move substantially along a straight path along which a plurality of positions are defined, each position corresponding to a different type of control of the gearbox. In some cases, in addition to following the usual rectilinear movement, the gearshift lever can also move transversely relative thereto, in a predetermined position, in order to select a so-called sequential mode of operation comprising two positions which are opposed relative to a neutral position and each of which corresponds to an increase or a decrease of a transmission ratio of the gearbox. As an alternative to the sequential-operation section, there may be an operating section which provides for several positions arranged in a grid simulating the positions corresponding to the gears of a conventional mechanical control.

Moreover, in some servo-assisted operating units, push-buttons are provided in addition to the lever control, and may be positioned, for example, on the dashboard, for selecting particular gearbox-control modes, or on the steering wheel, for example, as a pair of push-buttons enabling the driver of the vehicle to impart a sequential control, one push-button corresponding to an increase of a transmission ratio, whilst the other corresponds to a decrease of a transmission ratio.

More specifically, the invention relates to a unit for the servo-assisted operation of a motor-vehicle gearbox having a pair of mechanical operating members for selection and engagement, respectively, the combined movement of which allows to bring about the engagement of one of the transmission ratios of the gearbox, the unit comprising actuator means which can control the combined movement of the mechanical operating members in dependence on the position of remote gearshift control means.

A generic unit of this type is known from FR-A-2 777 834.

However, servo-assisted gearboxes of the type mentioned above have the disadvantage that gear selection, that is, the engagement of the gears, is entrusted wholly or at least partially to an electronic control unit which generally takes away from the driver the sensation of direct control of the operation of the gearbox, thus depriving him of the pleasure of controlling the vehicle directly.

Moreover, in known servo-assisted gearboxes, the fact that the gearbox actuator devices are arranged inside the engine compartment necessitates the provision of space in which to locate them. This generally constitutes a problem since the space available in the engine compartments of motor vehicles produced at the moment is very small. Moreover, the engine compartment is in any case a hostile environment with regard to the installation of electrical and/or electronic devices because of the high temperatures which are reached in this compartment, due to the fact that aggressive substances such as liquids and gases are present therein, and since the devices present in this compartment are subject to mechanical stresses due to vibration of the systems which the compartment contains.

For these reasons, it is necessary to provide special protection for the gearbox actuator devices when they have to be disposed in the engine compartment, which also aggravates the above-mentioned problems resulting from the small amount of available space.

In order to overcome the disadvantages of known solutions, the subject of the invention is an operating unit of the type defined above, having the characteristics specified in the characterizing portion of claim 1.

By virtue of this solution, it is possible to produce a servo-assisted gearbox the actuator devices of which can be remote from the gearbox casing and, more specifically, outside the engine compartment. It is thus possible to produce an operating unit which is generally more reliable, both in comparison with conventional mechanical gearbox operating units and in comparison with known servo-assisted gearbox operating units.

Moreover, the structure of the control unit of the invention, which provides for the use of a connection of a type similar to that used in conventional mechanical gearboxes for connection to the gearbox-operating levers disposed on the gearbox casing, enables a servo-assisted operating unit to be fitted in vehicles originally provided with a purely mechanical gearbox.

According to a preferred characteristic of the invention, the operating unit includes an electronic control unit operatively interposed between means for controlling the movement of the elongate mechanical transmission elements and sensor means which can detect the instantaneous position of remote gearshift means, the unit being arranged to process the signals coming from the sensor means and to send operating signals to the control means in order to bring about the movement of the elongate transmission elements in a manner such that these elements bring about the engagement of a transmission ratio of the gearbox which corresponds to the instantaneous position of the remote gearshift means.

The control unit according to the invention thus includes a purely mechanical portion for interfacing with the gearbox, particularly with its mechanical operating members, and a portion which includes electronic and electromechanical components, and these portions can be disposed in the engine compartment and in a passenger compartment of the vehicle, respectively.

The mechanical portion of the unit does not therefore occupy space in the engine compartment other than that normally occupied by a conventional mechanical operating unit, whilst the portion which is housed entirely in the passenger compartment, and which is thus less subject to hostile working conditions, has the intrinsic advantages of servo-assisted control units. In particular, these advantages consist of the fact that it is possible to provide a shorter and smaller gearshift lever which saves useful space inside the passenger compartment of the vehicle and reduces the risks to the passengers in the event of an impact. Moreover, by virtue of the fact that the gearshift lever is more compact, the travels necessary for its movement and the loads required to engage the various transmission ratios of the gearbox are reduced.

Moreover, since the gearshift lever does not act on mechanical transmission members directly, both the travels and the loads of the lever are constant and repeatable since the resilient yielding which is typical of mechanical operating units, and hence any vibration of elements of the system, are completely absent.

By virtue of the use of a gearshift lever the position of which is monitored by means of sensors, it is also possible to provide further positions of the lever in addition to those normally provided for mechanical operating units, with additional functions, for example, relating to particular controls of the gearbox during specific operating conditions such as, for example, when the vehicle is parked.

Further characteristics and advantages of the invention will become clearer from the following detailed description, provided purely by way of non-limiting example with reference to the appended drawings, in which:
Figure 1 is a general schematic view of an operating unit according to the invention,
Figure 2 is a schematic side elevational view of a servomechanism associated with the unit of Figure 1, and
Figure 3 is an elevational view of the portion indicated by the arrow III of Figure 2.

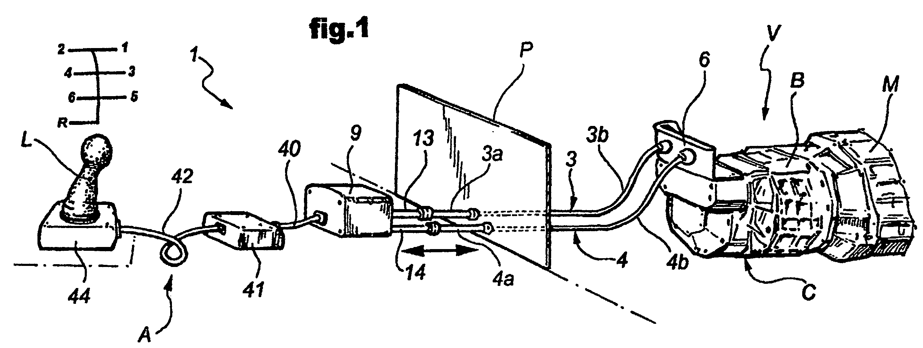

With reference initially to Figure 1, a unit according to the invention for the servo-assisted operation of a motor-vehicle gearbox C is generally indicated 1. The gearbox C comprises a casing B connected, in known manner, to a power unit M of the vehicle, both the gearbox C and the power unit M being disposed in an engine compartment V of the vehicle.

A pair of mechanical operating members, for example, constituted by selection and engagement levers, respectively, (not shown in the drawings), project from the gearbox casing B, also in known manner, their combined movement enabling the various transmission ratios of the gearbox C to be engaged.

A respective push-pull cable 3, 4, that is, a cable including a sheath 3b, 4b inside which a flexible cable 3a, 4a can slide, is preferably connected to each of these levers. The sheath 3b, 4b extends, in particular, between two opposed reaction elements one of which is formed, for example, by an abutment element 6 fixed to the casing B, whilst the other is advantageously constituted by a fireproof partition P separating the engine compartment V and a passenger compartment A of the motor vehicle. The flexible cables 3a, 4a extend through the partition P and each is connected to the end of a respective shaft 13, 14 which extends from a box 9 mounted in the compartment A in the vicinity of the partition P.

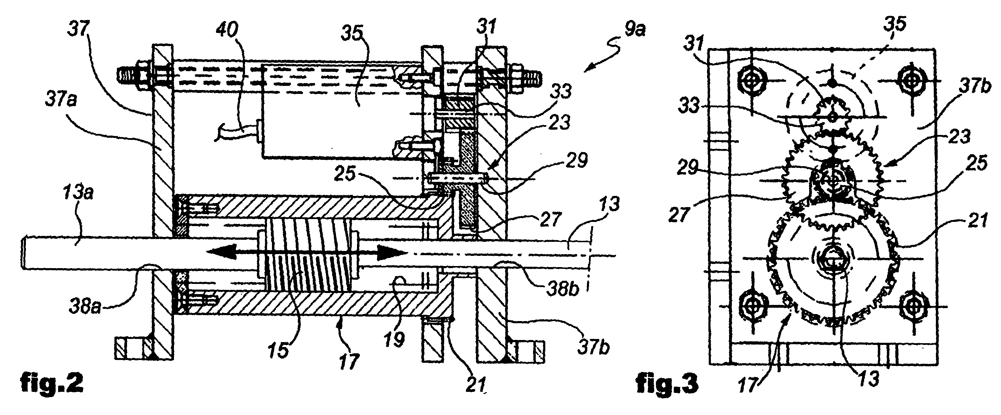

The box 9 houses a pair of servomechanisms, each of which includes an electromechanical linear actuator for controlling the movement of the respective cable 3a, 4a, and only one of which is shown in Figure 2, in which it is indicated 9a.

The choice of two distinct actuators for controlling the above mentioned mechanical operating members clearly constitutes a choice which may be preferable in some situations of use but which is certainly not essential for the purposes of the implementation of the invention. In particular, the invention may be implemented with actuator means which may differ in number and type from those described and illustrated herein, provided that they are capable of controlling the aforesaid operating members in an equivalent manner.

The sliding shaft 13 (14) of the actuator 9a is advantageously formed integrally with a screw element 15 which is arranged coaxially inside a hollow cylindrical casing 17 so that its external thread engages an internal thread 19 of the casing 17. The casing 17 has a pair of axial openings through which the shaft 13 projects on one side and a shaft 13a projects on the opposite side, the shafts 13 and 13a being coaxial with one another. The shafts 13 and 13a have, in particular, the function of guide elements for guiding the rectilinear movement of the screw element 15 to and fro along the internal cavity of the casing 17 as a result of the rotation of the casing 17.

A set of teeth is formed on the external surface of the casing 17 for engagement by a corresponding set of teeth of a first gear 25 of a reduction unit 23. The reduction unit 23 also comprises another gear 27 connected rigidly to the gear 25 and mounted coaxially therewith so as to be freely rotatable on a shaft 29 parallel to the axis of movement of the screw 15 relative to the internal thread 19, the gears 25 and 27 being fixed for rotation together. The gear 27 in turn meshes with a pinion 31 keyed to a drive shaft 33 of an electric motor 35 the axis of which is parallel to the shaft 13. The motor 35 is supported by a frame 37 having a pair of opposed main walls 37a, 37b connected to one another by fixing pillars, each wall 37a, 37b having a respective through-hole 38a, 38b through which the shafts 13 and 13a can extend.

The motor 35 is connected by means of wiring 40 to an electronic control unit 41 which in turn is connected by means of further wiring 42 to a support unit 44 of a gearshift lever L. The lever L may, in particular, be movable so as to reach a plurality of positions arranged in a grid-like configuration, for example, of the type corresponding to that of normal mechanical gearshifts.

Within the support unit 44 there are sensor means which are not shown in detail since they are of known type or are within the capabilities of an expert in the art, and which can recognize the reaching, by the lever L, of each of its positions corresponding to the engagement of a gear of the gearbox C.

The signals detected by the sensors associated with the support unit 44 are therefore transmitted by means of the wiring 42 to the electronic control unit 41 which processes them and generates corresponding signals for operating the actuators 9a. These signals are then transmitted to the motors 35 of the respective actuators 9a by means of the wiring 40. The reaching of one of the positions for the engagement of a transmission ratio by the lever L thus results in the engagement of the corresponding gear ratio of the gearbox C by means of the actuators in the box 9.

The system described above has, in particular, the considerable advantage of being easily interchangeable with a conventional mechanical gearbox operating unit, even after the manufacture of the respective vehicle, by virtue of the fact that it does not require any change in the available space or the addition of auxiliary systems inside the engine compartment. Moreover, the electronic control unit 41 can operate independently of the other systems of the vehicle so that it does not necessarily have to be interfaced with other electronic control units mounted in the vehicle, so that the operating unit according to the invention has the advantage of being able to operate in an "isolated configuration, as is the case for conventional mechanical operating units. The electronic control unit 41 may, in any case, be arranged to be connected to any other electronic systems in the vehicle, in which case the operation of the gearbox operating unit can take account of information coming from other systems in the vehicle, in operation, in a manner "integrated" with the other systems of the vehicle

## Claims

1. A motor vehicule including a unit for the servo-assisted operation of a motor-vehicle gearbox (C) disposed in the engine compartment (V) of the motor vehicle and provided with a pair of mechanical operating members for selection and engagement, respectively, the combined movement of which brings about the engagement of one of the transmission ratios of the gearbox (C); the unit comprising actuator means (9a) which can control the combined movement of the mechanical operating members in response to the position of a remote gearshift means (2) through elongate mechanical transmission elements (3, 4), and an electronic control unit (41) for controlling the operation of the actuator means (9a); the unit being **characterized in that** the electronic control unit (41) and the actuator means (9a) are disposed in an environment (A) separated from the engine compartment (V).

2. A motor vehicule including a unit according to Claim 1, **characterized in that** the electronic control unit (41) and the actuator means (9a) are disposed in the passenger compartment (A) of the motor vehicle.

3. A motor vehicule including a unit according to Claim 1 or Claim 2, **characterized in that** the elongate mechanical transmission elements comprise two push-pull cables (3, 4).

4. A motor vehicule including a unit according to any of the preceding Claims, **characterized in that** the elongate mechanical transmission elements (3, 4) are disposed predominantly in the engine compartment (V).

5. A motor vehicule including a unit according to any of Claims 2 to 4, **characterized in that** the elongate mechanical transmission elements (3, 4) extend through a fireproof partition (P) interposed between the engine compartment (V) and the passenger compartment (A), the actuator means (9a) being disposed in the vicinity of the fireproof partition (P).

6. A motor vehicle including a unit according to Claims 3 and 5, **characterized in that** the fireproof partition (P) constitutes a reaction element for a sheath (3b, 4, 4b) for the sliding of a cable (3a, 4a) of a respective push-pull cable (3, 4).

7. A motor vehicule including a unit according to any of the preceding Claims, **characterized in that** it further includes sensor means which are operatively connected with the electronic control unit (41) and can detect the instantaneous position of a gearshift lever (L) of the gearbox (C), the control unit (41) being arranged to process the signal coming from the sensor means and to send operating signals to the actuator means (9a)in order to bring about the movement of the elongate transmission elements (3, 4) in a manner such that these elements bring about the engagement of a transmission ratio of the gearbox (C) which corresponds to the instantaneous position of the gearshift lever (L).

8. A motor vehicule including a unit according to any of the preceding Claims, **characterized in that** the actuator means (9a) include, for each elongatemechanical transmission element (3, 4), an electric motor (35) which can rotate a cylindrical casing (17) having an internal thread (19) in engagement with a screw element (15) connected to an end of the respective element (3 , 4).

9. A motor vehicule including a unit according to Claim 8, **characterized in that** the electric motor (35) has a drive shaft (33) to which a pinion (31) is keyed, the pinion meshing with a gear (27) connected for rotation with another gear (25) which meshes with a ring gear connected to the outer surface of the cylindrical casing (17).

10. A motor vehicule including a unit according to Claim 8 or Claim 9, **characterized in that** the screw element (15) includes a coaxial and integral shaft (13, 13a) having the function of a rectilinear guide for the movement of the screw element (15) relative to the internal thread (19) of the cylindrical casing (17), an end (13) of the coaxial shaft being connected to an end of a respective elongate mechanical transmission element (3, 4).

## Patentansprüche

1. Kraftfahrzeug mit einer Einheit für die servounterstützte Betätigung eines Kraftfahrzeuggetriebes (C), das im Motorraum (V) des Kraftfahrzeugs angeordnet und mit einem Paar von mechanischen Betätigungselementen für die Auswahl bzw. das Einrücken versehen ist, wobei durch deren kombinierte Bewegung ein Übersetzungsverhältnis der Übersetzungsverhältnisse des Getriebes (C) eingerückt wird; wobei die Einheit eine Betätigungseinrichtung (9a), die die kombinierte Bewegung der mechanischen Betätigungselemente in Abhängigkeit von der Stellung einer Fernsteuerungs-Schalthebeleinrichtung (L) über längliche, mechanische Übertragungselemente (3, 4) steuern kann, sowie eine elektronische Steuereinheit (41) enthält, um die Arbeitsweise der Betätigungseinrichtung (9a) zu steuern; wobei die Einheit **dadurch gekennzeichnet ist, dass** die elektronische Steuereinheit (41) und die Betätigungseinrichtung (9a) in einer Umgebung (A) angeordnet sind, die vom Motorraum (V) getrennt ist.

2. Kraftfahrzeug mit einer Einheit gemäß Anspruch 1, **dadurch gekennzeichnet, dass** die elektronische Steuereinheit (41) und die Betätigungseinrichtung (9a) im Fahrgastraum (A) des Kraftfahrzeugs angeordnet sind.

3. Kraftfahrzeug mit einer Einheit gemäß Anspruch 1 oder Anspruch 2, **dadurch gekennzeichnet, dass** die länglichen, mechanischen Übertragungselemente zwei Druck/Zug-Kabel (3, 4) besitzen.

4. Kraftfahrzeug mit einer Einheit gemäß irgendeinem der bisherigen Ansprüche, **dadurch gekennzeichnet, dass** die länglichen, mechanischen Übertragungselemente (3, 4) überwiegend im Motorraum (V) angeordnet sind.

5. Kraftfahrzeug mit einer Einheit gemäß Anspruch 2 bis 4, **dadurch gekennzeichnet, dass** die länglichen, mechanischen Übertragungselemente (3, 4) durch eine feuerbeständige Trennwand (P) verlaufen, die zwischen dem Motorraum (V) und dem Fahrgastraum (A) liegt, wobei die Betätigungseinrichtung (9a) in der Nähe der feuerbeständigen Trennwand (P) angeordnet ist.

6. Kraftfahrzeug mit einer Einheit gemäß Anspruch 3 und 5, **dadurch gekennzeichnet, dass** die feuerbeständige Trennwand (P) ein Reaktionselement für eine Hülle (3b, 4, 4b) für das Gleiten eines Kabels (3a, 4a) eines entsprechenden Druck/Zug-Kabels (3, 4) bildet.

7. Kraftfahrzeug mit einer Einheit gemäß irgendeinem der bisherigen Ansprüche, **dadurch gekennzeichnet, dass** die Einheit weiters Fühlereinrichtungen aufweist, die betriebsmäßig mit der elektronischen Steuereinheit (41) verbunden sind und die momentane Stellung eines Gangschalthebels (L) des Getriebes (C) abtasten können, wobei die Steuereinheit (41) so aufgebaut ist, dass sie jene Signale verarbeitet, die von den Fühlereinrichtungen stammen, und zur Betätigungseinrichtung (9a) Betriebssignale aussendet, um die Bewegung der länglichen Übertragungselemente (3, 4) so hervorzurufen, dass diese Elemente das Einrücken eines Übersetzungsverhältnisses des Getriebes (C) erzeugen, das der momentanen Stellung des Gangschalthebels (L) entspricht.

8. Kraftfahrzeug mit einer Einheit gemäß irgendeinem der bisherigen Ansprüche, **dadurch gekennzeichnet, dass** die Betätigungseinrichtung (9a) für jedes längliche, mechanische Übertragungselement (3, 4) einen Elektromotor (35) aufweist, der ein zylindrisches Gehäuse (17) in Drehung versetzen kann, das ein Innengewinde (19) besitzt, das mit einem Schraubenspindelelement (15) im Eingriff steht, das mit einem Ende des entsprechenden Elements (3, 4) verbunden ist.

9. Kraftfahrzeug mit einer Einheit gemäß Anspruch 8, **dadurch gekennzeichnet, dass** der Elektromotor (35) eine Abtriebswelle (33) besitzt, auf die ein Ritzel (31) aufgekeilt ist, wobei das Ritzel mit einem Zahnrad (27) im Eingriff steht, das für eine Drehung mit einem anderen Zahnrad (25) verbunden ist, das in ein Ringzahnrad eingreift, das mit der Außenfläche des zylindrischen Gehäuses (17) verbunden ist.

10. Kraftfahrzeug mit einer Einheit gemäß Anspruch 8 oder Anspruch 9, **dadurch gekennzeichnet, dass** das Schraubenspindelelement (15) eine koaxiale und integrierte Welle (13, 13a) aufweist, die die Funktion einer geradlinigen Führung für die Bewegung des Schraubenspindelelements (15) relativ zum Innengewinde (19) des zylindrischen Gehäuses (17) besitzt, wobei ein Ende (13) der koaxialen Welle mit einem Ende eines entsprechenden länglichen, mechanischen Übertragungselements (3, 4) verbunden ist.

## Revendications

1. Véhicule à moteur comprenant une unité pour le fonctionnement assisté d'une boîte de vitesses de véhicule à moteur (C) disposée dans le compartiment moteur (V) du véhicule à moteur et muni d'une paire de pièces d'actionnement mécanique pour une sélection et un engagement respectivement, dont le déplacement combiné provoque l'engagement d'un des rapports de transmission de la boîte de vitesses (C), l'unité comprenant un moyen d'actionneur (9a) pouvant commander le déplacement combiné des pièces d'actionnement mécanique en réponse à la position d'un moyen de passage de rapports à distance (L) par l'intermédiaire d'éléments allongés de transmission mécanique (3, 4), et une unité de commande électronique (41) pour commander le fonctionnement du moyen d'actionneur (9a), unité **caractérisée en ce que** l'unité de commande électronique (41) et le moyen d'actionneur (9a) sont disposés dans un environnement (A) séparé du compartiment moteur (V).

2. Véhicule à moteur comprenant une unité selon la revendication 1, **caractérisé en ce que** l'unité de commande électronique (41) et le moyen d'actionneur (9a) sont disposés dans le compartiment passager (A) du véhicule à moteur.

3. Véhicule à moteur comprenant une unité selon la revendication 1 ou 2, **caractérisé en ce que** les éléments allongés de transmission mécanique comprennent deux câbles à va-et-vient (3, 4).

4. Véhicule à moteur comprenant une unité selon l'une quelconque des revendications précédentes, **caractérisé en ce que** les éléments allongés de transmission mécanique (3, 4) sont disposés, en majeure partie, dans le compartiment moteur (V).

5. Véhicule à moteur comprenant une unité selon l'une quelconque des revendications 2 à 4, **caractérisé en ce que** les éléments allongés de transmission mécanique (3, 4) traversent une séparation de pare-feu (P) interposée entre le compartiment moteur (V) et le compartiment passager (A), le moyen d'actionneur (9a) étant disposé au voisinage de la séparation de pare-feu (P).

6. Véhicule à moteur comprenant une unité selon les revendications 3 et 5, **caractérisé en ce que** la séparation de pare-feu (P) constitue un élément de réaction pour un gainage (3b, 4, 4b) pour le coulissement d'un câble (3a, 4a) d'un câble respectif à va-et-vient (3, 4).

7. Véhicule à moteur comprenant une unité selon l'une quelconque des revendications précédentes, **caractérisé en ce qu'**il comprend, de plus, des moyens de capteur qui sont connectés, de façon fonctionnelle, à l'unité de commande électronique (41) et peuvent détecter la position instantanée d'un levier de vitesses (L) de la boîte de vitesses (C), l'unité de commande (41) étant prévue pour traiter les signaux provenant des moyens de capteur et pour envoyer des signaux de fonctionnement au moyen d'actionneur (9a) afin de provoquer le déplacement des éléments allongés de transmission (3, 4) de telle façon que ces éléments provoquent l'engagement d'un rapport de transmission de la boîte de vitesses (C) correspondant à la position instantanée du levier de vitesses (L).

8. Véhicule à moteur comprenant une unité selon l'une quelconque des revendications précédentes, **caractérisé en ce que** le moyen d'actionneur (9a) comprend, pour chaque élément allongé de transmission mécanique (3, 4), un moteur électrique (35) pouvant faire tourner un boîtier cylindrique (17) possédant une couronne dentée (19) en engagement avec un élément de vis (15) connecté à une extrémité de l'élément respectif (3, 4).

9. Véhicule à moteur comprenant une unité selon la revendication 8, **caractérisé en ce que** le moteur électrique (35) possède un arbre d'entraînement (33) sur lequel est claveté un pignon denté (31), le pignon engrénant avec une roue dentée (27) connectée en rotation avec un autre pignon denté (25) engrénant avec une couronne dentée connectée sur la surface externe du boîtier cylindrique (17).

10. Véhicule à moteur comprenant une unité selon la revendication 8 ou 9, **caractérisé en ce que** l'élément de vis (15) comprend un arbre coaxial et intégral (13, 13a) ayant pour fonction le guidage rectiligne du déplacement de l'élément de vis (15) par rapport à la couronne dentée (19) du boîtier cylindrique (17), une extrémité (13) de l'arbre coaxial étant raccordée à une extrémité d'un élément allongé respectif de transmission mécanique (3, 4).
